Europäisches Patentamt

European Patent Office

Office européen des brevets

(19)

(11) Veröffentlichungsnummer : **0 033 387**
**B1**

(12) **EUROPÄISCHE PATENTSCHRIFT**

(45) Veröffentlichungstag der Patentschrift :
17.10.84

(21) Anmeldenummer : 80108097.9

(22) Anmeldetag : 22.12.80

(51) Int. Cl.³ : **B 22 C   7/00**, B 22 C  21/12,
**B 29 C   1/00**

(54) Düse zum Entlüften, Belüften oder Bedampfen von Formen.

(30) Priorität : 28.01.80 DE 3002939

(43) Veröffentlichungstag der Anmeldung :
12.08.81 Patentblatt 81/32

(45) Bekanntmachung des Hinweises auf die Patenterteilung : 17.10.84 Patentblatt 84/42

(84) Benannte Vertragsstaaten :
CH DE FR GB IT LI SE

(56) Entgegenhaltungen :
AT-A-   188 036
DE-C-   861 738
FR-A-   976 414
FR-A- 1 587 717
US-A- 2 482 321
US-A- 2 537 889
US-A- 3 188 701

(73) Patentinhaber : Zimmermann, Gottfried
Wiesenweg 25
D-6335 Lahnau 2 (DE)

(72) Erfinder : Zimmermann, Gottfried
Wiesenweg 25
D-6335 Lahnau 2 (DE)

Jouve, 18, rue St-Denis, 75001 Paris, France

**Beschreibung**

Die Erfindung betrifft eine Düse zum Entlüften, Belüften oder Bedampfen von Formen für Gießereizwecke und die Kunststoffverarbeitung nach dem Oberbegriff des Anspruchs 1 (AT-B-188 036).

Bei der Herstellung von Gießformen oder Kernen werden in die Kernbüchsen bzw. Dauergießformen Luftdüsen eingesetzt, um beim Einfüllen des Formstoffes die in der Form befindliche Luft schnell und vollständig abzuführen, dabei aber den Formsand zurückzuhalten. Auch in der kunststoffverarbeitenden Industrie werden derartige Düsen zum Bedampfen von Schaumstoff-Formen oder beim Tiefziehformverfahren eingesetzt.

Bis heute werden fast ausschließlich sogenannte Schlitzdüsen verwendet, bei denen durch Einfräsen von Nuten in den Düsenboden die schlitzförmigen Luftdurchtrittsöffnungen mit den dazwischenliegenden parallel zueinander verlaufenden Rippen gebildet werden.

Der Düsentopf mit ausreichend dickem Boden wird dabei auf Drehautomaten aus Stangenmaterial (vorwiegend Messing und Stahl) gefertigt. Anschließend wird der Düsenboden durch Eintauchen in eine Sägenpaket in einem Arbeitsgang geschlitzt.

Während die Schlitze einerseits möglich eng sein sollen, um den Formstoff zurückzuhalten, ist andererseits ein möglichst großer Gesamtdurchtrittsquerschnitt zur Abführung der entweichenden Luft oder dgl. erwünscht. Die Materialstege sollten sich weder beim Eintreiben der Düse in die Formwand, noch bei laufendem Betrieb der Form in ihrer Lage zueinander verändern.

Man hat deshalb zu ihrer gegenseitigen stabileren Fixierung bereits vorgeschlagen (AT-B-188 036) auf der Rückseite der Rippen einen Stabilisierungsring anzuordnen. Dies hat aber den Nachteil, daß sich zwischen den Rippen auf dem tiefer liegenden Stabilisierungskörper Formsand aufbaut, welcher den Luftdurchtritt beeinträchtigt oder die Düse verstopft. Außerdem können dabei Kippbewegungen der Rippen wegen der nur punktförmigen Auflage kaum verhindert werden.

Der Nachteil, daß die rückseitigen Verstärkungsringe dieser Düsen die Verstopfung der Düsen begünstigen, wird zwangsläufig — mangels einer besseren Lösung — in Kauf genommen. Alle Versuche, die Stabilisierung auf andere Weise zu lösen, etwa durch die Rippengestaltung analog dem Feuerungsrost bei Öfen und Herden haben zu keinem brauchbaren Ergebnis geführt.

Aus einem Stück gepresste oder gegossene Düsen aus Metall mit Quersteg (vgl. US-A-3 188 701) wären zwar bezüglich der Rippenstabilisierung problemlos, dieser Weg scheidet aber an den neute geforderten schmalen Schlitzen von 0,2 und 0,3 mm, wie sie auf dem Weg des Zerspanens mittels eines Sägepaketes erreicht werden, aus.

Grundsätzlich ist zu unterscheiden zwischen Schlitzdüsen aus Metall, einerlei ob mit oder ohne Querverstrebung, die spanlos durch Gießen, Pressen, Spritzen oder Stanzen in einem einzigen Arbeitsgang gefertigt werden können und den hier in Rede stehenden Schlitzdüsen, die auf dem Wege des Zerspanens in mehreren Arbeitsgängen hergestellt werden. Hierbei ist die funktionsgerechte Stabilisierung der feinen Rippen ein echtes Problem wie die zahlreichen Versuche in der Vergangenheit gezeigt haben.

Die Erfindung geht von der Aufgabe aus, eine auf dem Wege des Zerspanens hergestellte Schlitzdüse so zu gestalten, daß sie bei größtmöglichem Luftdurchtrittsquerschnitt äußerst stabil ist, ohne daß sich die Schlitze verstopfen. Zur Lösung dieser Aufgabe werden die im Anspruch angegebenen Merkmale vorgeschlagen.

Bei vorliegender Erfindung werden die einzelnen Schlitze sehr eng nebeneinander gelegt, so daß nur schmale Rippen verbleiben, die anschließend nicht auf die herkömmliche Weise von der Rückseite her abgestützt werden, sondern durch einen von der Außenseite her nachträglich eingesetzten Quersteg miteinander verbunden werden.

Der in die Rippen eingesetzte Quersteg bildet eine sich beidseitig fest auf dem Düsenmantel abstützende stabile Brücke zur Halterung und Fixierung der Rippen. Die Anbindung der Rippen an das Versteifungselement über einen relativ großen Rippenquerschnitt ergibt eine äußerst stabile Gesamtkonstruktion, welche schwächere Rippen zugunsten des Strömungsquerschnittes zuläßt. Weil das eingesetzte Versteifungselement mit der Düsenoberfläche plan abschließt, ist im Gegensatz zu den bekannten untergesetzten Ringen ein Verstopfen der Düse durch sich auf dem Versteifungselement aufbauenden Formsand oder dgl. nicht möglich. Beim Einschlagen der Düse in die Formwand können sich die Rippen wegen der robusten gegenseitigen Verbindung nicht so leicht deformieren. Das eingesetzte Versteifungselement bildet kein Hindernis bei evtl. notwendiger Profilierung der Düsenoberfläche zur Anpassung an die Formoberfläche.

In der Zeichnung ist die Erfindung an Ausführungsbeispielen dargestellt. Es zeigen:

Figur 1 einen Schnitt durch eine Düse parallel zu den Düsenschlitzen mit einem eingelegten Metallstreifen,

Figur 2 a-c eine aus zwei Düsenhälften zusammengesetzte Düse,

Figuren 3 und 4 Metallstreifen mit angeformten Abdeckfolien zum teilweisen Verdecken der Düsenschlitze.

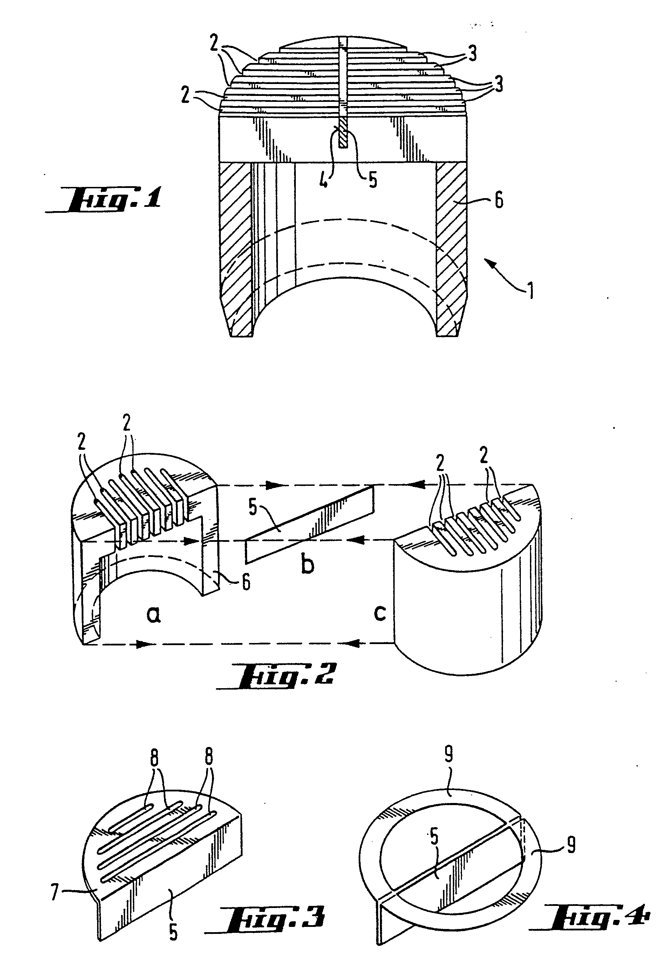

Der hohlzylindrische Düsenkörper 1, welcher in die Formwand eingeschlagen wird, ist an der dem Forminnenraum zugewandten Seite rostartig durch Schlitze 2 bildende Rippen 3 abgeschlossen. In einen die Rippen 3 erfassenden Querschlitz 4 ist ein aus einem Metallstreifen bestehender Quersteg 5 als Versteifungselement eingesetzt der entweder durch entsprechende Dimensionierung klemmfest gehalten wird, oder eingeklebt, eingeschweißt bzw. eingelötet ist. Durch Aufrauhung, Profolierung oder Lochung oder evtl. konische Ausbildung des Quersteges 5 kann erreicht werden, daß sich die Düse beim Einsetzen des Quersteges zunächst etwas spreizt und anschließend beim Einschlagen der Düse in die Formwand der Quersteg 5 klemmfest eingespannt wird. Eine Klemmung beim Einschlagen der Düse kann auch erreicht werden, indem man die übliche äußere Rändelung auch im Schlitzbereich vorsieht und gegebenenfalls die Rändelung besonders stark ausführt. Dadurch wird beim Einschlagen von außen Druck erzeugt, der den Quersteg festklemmt. Der Quersteg 5, sowie der entsprechende Querschlitz kann etweder wie in Fig. 1 gezeigt nur einen Teil der Rippenhöhe erfassen, oder auch die Rippen vollständig trennen. Es können auch zwei oder mehr Metallstreifen eingesetzt werden, wenn es die Düsengröße erforderlich macht. Bei der Ausführung gemäß Fig. 2 a-c wird zunächst die Düse halbiert. Auf diese Weise ist es möglich die Schlitze 2 von innen her lediglich bis an den Zylindermantel 6 einzufräßen, denn durchgehende Schlitze setzen sich im Bereich des Zylindermantels mit Formstoff zu, was nicht vorteilhaft ist. Nach dem Einfräßen der Schlitze werden die beiden Düsenhälften (a und c) unter Zwischenlage des Querstegs 5 (Fig. 2b) miteinander verbunden, z. B. verklebt. Der eingelegte Quersteg 5 kann mit einer dünnen, den Schlitzbereich der Düse abdeckenden Folie 7 versehen sein. Eine solche Befestigung einer Folie am Quersteg 5 könnte auch bei Düsen mit gelochter Düsenplatte angewandt werden. Diese Folie 7 ist nach Fig. 3 mit dem Quersteg 5 aus einem Stück gestanzt und weist schlitzförmige Aussparungen 8 parallel zum Quersteg 5 auf, so daß beim Aufbringen zusammen mit den Schlitzen der Düse verfeinerte Luftdurchtrittsöffnungen in Form eines Lochgitters entstehen. Außerdem werden die Schlitze im Düsenmantelbereich abgedeckt. Fig. 4 zeigt eine Ausführung mit lediglich einem die Schlitze der Düse im Düsenmantelbereich abdeckenden Ring 9, welcher verhindert, daß sich im Düsenmantelbereich Formstoff zwischen den Schlitzen festsetzt. Das Versteifungselement könnte zur Erhöhung seines Widerstandsmoments profiliert sein, z. B. an seiner Unterseite bogenförmig ausgebildet sein. Es ist auch denkbar, das Versteifungselement in eine die Rippen durchquerende Bohrung einzusetzen.

## Ansprüche

1. Düse zum Entlüften, Belüften und Bedampfen von Formen für Giessereizwecke und die Kunststoffverarbeitung, die auf dem Wege des Zerspanens hergestellt ist und deren Luftdurchtrittsöffnungen durch parallele im Abstand zueinander angeordnete und die Düse überquerende Rippen gebildet werden, wobei die Rippen durch sie verbindende Versteifungselemente stabilisiert sind, dadurch gekennzeichnet, dass als Versteifungselement ein in entsprechende Nuten (4) oder Rippen (3) von der Düsenaussenseite her fluchtend nachträglich eingesetzter Quersteg (5) dient.

2. Düse nach Anspruch 1, dadurch gekennzeichnet, dass der Quersteg (5) klemmfest in die Rippen (3) eingesetzt ist.

3. Düse nach Anspruch 1 oder 2, dadurch gekennzeichnet, dass der Quersteg (5) in die Rippen eingeklebt, eingelötet oder eingeschweisst ist.

4. Düse nach einem der Ansprüche 1 bis 3, dadurch gekennzeichnet, dass das Versteifungselement (5) im mittleren Bereich als Ring ausgebildet ist.

5. Düse nach einem der Ansprüche 1 bis 4, dadurch gekennzeichnet, dass der Quersteg (5) mit einer dünnen, die Durchtrittsöffnungen der Düse teilweise abdeckenden Folie (7) versehen ist.

6. Düse nach einem der Ansprüche 1 bis 5, dadurch gekennzeichnet, dass die Folie (7) parallel zum Metallstreifen (5) geschlitzt ist.

7. Düse nach einem der Ansprüche 1 bis 6, dadurch gekennzeichnet, dass der Quersteg (5) mit einem die Schlitze (2) im Bereich des Düsenmantels abdeckenden äusseren Ring (9) versehen ist.

8. Düse nach einem der Ansprüche 1 bis 7, dadurch gekennzeichnet, dass sie aus zwei Düsenhälften mit zwischengesetztem Metallstreifen als Quersteg (5) zusammengesetzt ist.

## Claims

1. A nozzle for airing, venting and vaporizing moulds for the purposes of foundry and the processing of plastic materials, said nozzle being made by means of removing material and the air passage openings of which are formed by ribs spaced in parallel arrangement and crossing the ribs, the ribs being stabilized by stiffening elements connecting them, characterized in that as a stiffening element serves a web inserted subsequently into the respective grooves (4) or ribs (3) in alignment from the outside of the nozzle.

2. A nozzle according to the Claim 1, characterized in that the web (4) is inserted into the ribs (3) in clamped arrangement.

3. A nozzle according to the Claims 1 or 2, characterized in that the web (5) is pasted, soldered or solded into the ribs.

4. A nozzle according to one of the Claims 1 to 3, characterized in that the stiffening element (5) is shaped as a ring in its medium range.

5. A nozzle according to one of the Claims 1 to 4, characterized in that the web (5) is provided with a thin foil (7) partially covering the slots (2) of the nozzle.

6. A nozzle according to one of the Claims 1 to 5, characterized in that the foil (7) is slotted in parallel arrangement to the metal strip.

7. A nozzle according to one of the Claims 1 to 6, characterized in that the web (5) is provided with an outer ring (9) covering the slots (2) within the range of the shell of the nozzle.

8. A nozzle according to one of the Claims 1 to 7, characterized in that they are composed of two halves of a nozzle having a metal strip as a transversal web inserted between them.

**Revendications**

1. Tuyère pour désaérer, aérer et vaporiser des moules pour les buts de fonderie et traitement de matières plastiques, construite par la voie de l'enlèvement de copeaux et dont les orifices pour le passage de l'air sont formés par des nervures parallèles disposées à distance et en traversant la tuyère, les nervures étant stabilisées par des éléments raidisseurs, caractérisée en ce que comme élément raidisseur sert une traverse (5) insérée ultérieurement à partir de l'extérieur des nervures dans des rainures (4) ou nervures (5).

2. Tuyère conformément à la revendication 1, caractérisée en ce que la traverse (5) est insérée et bloquée dans les nervures (3).

3. Tuyère conformément aux revendications 1 ou 2, caractérisée en ce que la traverse (5) est collée, soudée ou brasée dans les nervures.

4. Tuyère conformément aux revendications 1 à 3, caractérisée en ce que l'élément raidisseur (5), dans son centre, est formé comme un anneau.

5. Tuyère conformément à une des revendications 1 à 4, caractérisée en ce que la traverse (5) est munie d'une feuille mince (7) couvrant partiellement les fentes (2) de la tuyère.

6. Tuyère conformément à une des revendications 1 à 5, caractérisée en ce que la feuille (7) est munie de fentes parallèles à la bande métallique (5).

7. Tuyère conformément à une des revendications 1 à 6, caractérisée en ce que la traverse (5) est munie d'un anneau extérieur (9) couvrant les fentes (2) dans la zone de l'enveloppe de la tuyère.

8. Tuyère conformément à une des revendications 1 à 7, caractérisée en ce qu'elle est composée de deux moitiés ayant interposé une bande métallique formant la traverse.

**Fig.1**

**Fig.2**

**Fig.3**

**Fig.4**